# EUROPEAN PATENT SPECIFICATION

(11) **EP 2 434 371 B1**
(45) Date of publication and mention of the grant of the patent: **02.01.2019**
(21) Application number: 11181376.2
(22) Date of filing: 15.09.2011
(51) Int. Cl.: G06F 3/01, G06F 3/03, G06F 1/16

(54) **Information processing apparatus, information processing terminal, information processing method and computer program**
Informationsverarbeitungsvorrichtung, Informationsverarbeitungsendgerät, Informationsverarbeitungsverfahren und Computerprogramm
Appareil, terminal et procédé de traitement d'informations et programme informatique

(30) Priority: 24.09.2010 JP 2010214043
(43) Date of publication of application: 28.03.2012
(73) Proprietor: Sony Corporation, Tokyo 108-0075 (JP)
(72) Inventor: Kasahara, Shunichi, Minato-ku, Tokyo 108-0075 (JP); Miyashita, Ken, Minato-ku, Tokyo 108-0075 (JP); Yamamoto, Kazuyuki, Minato-ku, Tokyo 108-0075 (JP); Yamano, Ikuo, Minato-ku, Tokyo 108-0075 (JP); Mizunuma, Hiroyuki, Minato-ku, Tokyo 108-0075 (JP)
(74) Representative: MFG Patentanwälte Meyer-Wildhagen Meggle-Freund Gerhard PartG mbB

(56) References cited:
- EP-A1- 2 180 676
- US-A1- 2005 212 757
- US-A1- 2007 040 800
- US-A1- 2010 079 411

## Description

The present disclosure relates to an information processing apparatus, an information processing terminal, an information processing method and a computer program. More particularly, the present disclosure relates to an information processing terminal which has a projector, and an information processing apparatus, an information processing method and a computer program which carry out display control of the information processing terminal.

In recent years, miniaturization of mobile apparatus such as mobile communication terminal has been and is advancing. As the size of an apparatus itself decreases, also the size of the display area provided on the apparatus inevitably decreases. However, if the visibility of information and the operability are taken into consideration, then the size of the display region cannot be made smaller than a predetermined size, and there is a limitation to miniaturization of apparatus.

In contrast, a projector which is one of display apparatuses which project an image to a screen or the like to display the image does not require provision of the display region on the apparatus. Therefore, provision of a projector in place of the display region makes miniaturization of a mobile apparatus possible. For example, Japanese Patent Laid-Open No. 2009-3281 discloses a configuration wherein a projector module is provided on a portable electronic apparatus.

However, in the case where an image or the like is projected and displayed by a projector, different from a touch panel or the like, the display screen cannot be used to directly carry out an inputting operation thereon. Therefore, there is a problem that a large number of operating elements such as buttons for operating display information are obliged to be provided on the apparatus. Since the user operates the operation elements while observing the operation section, a considerable operation burden in operation is imposed on the user.

From European patent application EP 2 180 676 A1, a method of controlling a mobile communication terminal is known. Display information is projected via a projector module onto an external surface. a motion of the mobile communication terminal is detected via a sensor included in the terminal. An amount of the detected motion is calculated and the display information projected onto the external surface is moved based on the calculated amount of the detected motion.

Therefore, it is desirable to provide a novel and improved information processing apparatus, information processing terminal, information processing method and computer program which make it possible to intuitively operate display information in response to a variation of a state of an apparatus which includes a projector with respect to a projection plane.

Various respective aspects and features of the invention are defined in the appended claims. Combinations of features from the dependent claims may be combined with features of the independent claims as appropriate and not merely as explicitly set out in the claims.

Accordingly, there is disclosed an apparatus for processing image data. The apparatus may include an output unit configured to project a first image on a projection surface; a detection unit configured to detect movement of the apparatus; and a processor configured to change the first image to a second image based on the detected movement.

In accordance with an embodiment, there is provided a method for processing image data. The method may include projecting, by a projector included in the device, a first image on a projection surface; detecting movement of the device; and changing the first image to a second image based on the detected movement.

In accordance with an embodiment, there is provided a computer-readable storage medium including instructions, which, when executed on a processor, cause the processor to perform a method of processing image data. The method may include projecting a first image on a projection surface; detecting movement of a device, the processor being included in the device; and changing the first image to a second image based on the detected movement.

With the information processing apparatus, information processing terminal, information processing method and computer program, display information can be operated intuitively in response to a variation of a state of an apparatus which includes a projector with respect to a projection plane.

The above and other features and advantages of the present disclosure will become apparent from the following description and the appended claims, taken in conjunction with the accompanying drawings in which like parts or elements denoted by like reference symbols. The present invention is defined by the appended claims. Particular embodiments are set out in the respective dependent claims. Embodiments which do not fall within the scope of the claims do not describe part of the present invention.
FIG. 1 is a block diagram showing an example of a hardware configuration of an information processing terminal according to an embodiment of the present disclosure;
FIG. 2 is a schematic view illustrating a method for detecting a posture variation of the information processing terminal using an acceleration sensor;
FIG. 3 is a schematic view illustrating a method of detecting a posture variation of the information processing terminal using an angular speed sensor;
FIG. 4 is a block diagram showing a functional configuration of the information processing terminal;
FIG. 5 is a flow chart illustrating a display controlling process by the information processing terminal;
FIG. 6 is a schematic view illustrating an example of a display controlling process of display information by a translational movement of the information processing terminal;
FIG. 7 is a schematic view illustrating an example of a display controlling process for controlling an eye point of a content projected to a projection plane;
FIG. 8 is a schematic view illustrating an example of a display controlling process for carrying out scrolling of an object list projected to the projection plane;
FIG. 9 is a schematic view illustrating another example of the display controlling process for carrying out scrolling of an object list projected to the projection plane;
FIG. 10 is a schematic view illustrating a further example of the display controlling process for carrying out scrolling of an object list projected to the projection plane;
FIG. 11 is a schematic view illustrating a movement of the information processing terminal and a variation of display information when a desired object is selected from within an object group including a plurality of objects based on a proximity distance;
FIG. 12 is a schematic view illustrating a process for changing the display granularity of a map displayed on the projection plane in response to a proximity distance; and
FIG. 13 is a schematic view illustrating a process for changing the display granularity of a GUI displayed on the projection plane in response to a proximity distance.

In the following, an embodiment of the present disclosure is described in detail with reference to the accompanying drawings. It is to be noted that, in the specification and the accompanying drawings, substantially like parts or elements having substantially like functional configurations are denoted by like reference characters, and overlapping description of the same is omitted herein to avoid redundancy.

It is to be noted that description is given in the following order.
1. Configuration of the Information Process Terminal Including a Projector (example of a hardware configuration, functional configuration)
2. Display Control by the Information Processing Terminal
   2-1. Change of Display Information by Transitional Movement of the Information Processing Terminal
   2-2. Change of Display Information by a Gradient of the Information Processing Terminal
   2-3. Scroll of Display Information by a Gradient of the Information Processing Terminal
   2-4. Object Selection Operation from within an Object Group
   2-5. Zoom processing in Response to the Proximity Distance between the Information Processing Terminal and a Projection Plane

### <1. Configuration of the Information Process Terminal Including a Projector>

### Example of a Hardware Configuration

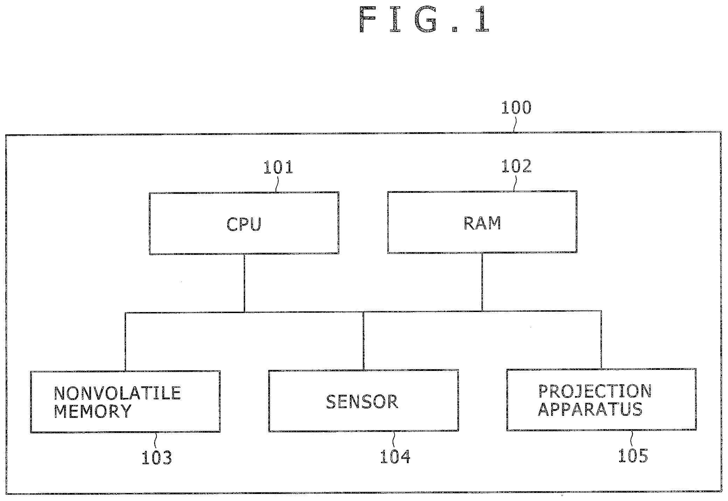

First, an example of a hardware configuration of an information processing terminal according to an embodiment of the present disclosure is described with reference to FIGS. 1 to 3.

The information processing terminal 100 according to the present embodiment includes a projector and varies the display substance of a GUI projected to a projection plane of a projection target body by the projector in response to a variation of the posture of the information processing terminal 100 or a change of the distance of the information processing terminal 100 to the projection plane. The information processing terminal 100 may be applied to various apparatus which include a projector irrespective of functions thereof such as, for example, small-sized apparatus like a personal digital assistant, a smartphone or the like.

Referring particularly to FIG. 1, the information processing terminal 100 includes a CPU 101 (e.g., a processor), a RAM (Random Access Memory) 102, a nonvolatile memory 103, a sensor 104 (e.g., a detection unit) and a projection apparatus 105 (e.g., an output unit).

The CPU 101 functions as an arithmetic processing unit and a control apparatus and controls general operation in the information processing terminal 100 in accordance with various programs. The CPU 101 may be a microprocessor. The RAM 102 temporarily stores programs to be used in execution by the CPU 101 and parameters and so forth which vary suitably in the execution. The CPU 101 and the RAM 102 are connected to each other by a host bus configured from a CPU bus or the like. The nonvolatile memory 103 stores programs, calculation parameters and so forth to be used by the CPU 101. The nonvolatile memory 103 can be formed using, for example, a ROM (Read Only Memory) or a flash memory.

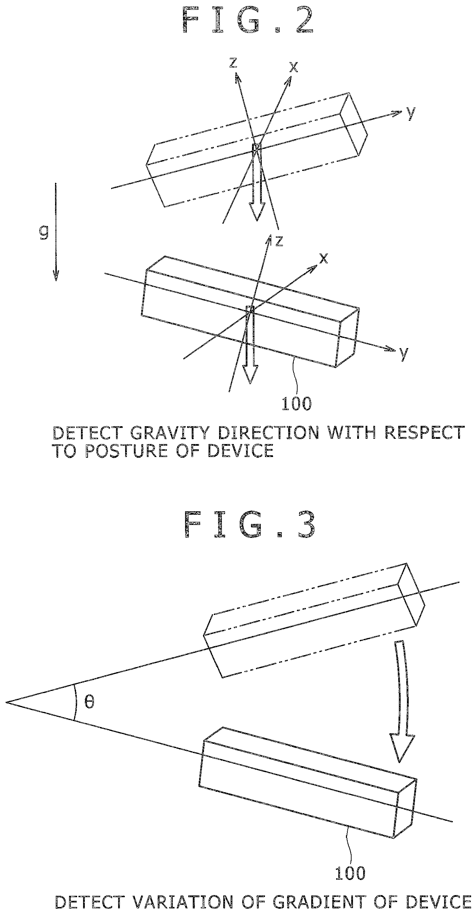

The sensor 104 includes one or a plurality of detection portions for detecting a variation of the posture of the information processing terminal 100 or a variation of the distance of the information processing terminal 100 to the projection plane. For the sensor 104 which detects a variation of the posture of the information processing terminal 100, for example, an acceleration sensor or an angular speed sensor as seen in FIG. 2 or 3 can be used.

The acceleration sensor detects an acceleration based on a variation of the position of the mass when it is accelerated. A mechanical acceleration sensor, an optical acceleration sensor, a semiconductor sensor of the capacitance type, piezoresistance type, Gaussian temperature distribution type or the like and so forth can be used. For example, it is assumed that the information processing terminal 100 is moved downwardly from an upper position on the plane of FIG. 2. At this time, if a three-axis acceleration sensor is provided in the information processing terminal 100, then the gravitational acceleration can be measured. Consequently, it is possible to detect the direction of gravity with respect to the posture of the terminal and detect the posture of the information processing terminal 100.

The angular speed sensor is a sensor such as a gyroscope which detects an angular speed utilizing dynamic inertia or optical interference acting upon a material body. For example, a mechanical angular speed sensor of the rotation type or the oscillation type, an optical angular speed sensor and so forth can be used. For example, it is assumed that the information processing terminal 100 is moved downwardly from an upper position on the plane of FIG. 3 similarly as in FIG. 2. At this time, if an angular speed sensor is provided in the information processing terminal 100, then it is possible to acquire an angular speed and detect a gradient θ of the information processing terminal 100.

The information processing terminal 100 further includes, as the sensor 104, a distance sensor which can detect the distance from the projection apparatus 105 to the projection plane.

The projection apparatus 105 is a display apparatus which projects an image or the like to the projection plane (e.g., a projection surface) of the projection target body such as a screen to display the image on the projection plane. The projection apparatus 105 can display an image in an expanded scale utilizing, for example, a CRT, liquid crystal or the DPL (registered trademark) (Digital Light Processing).

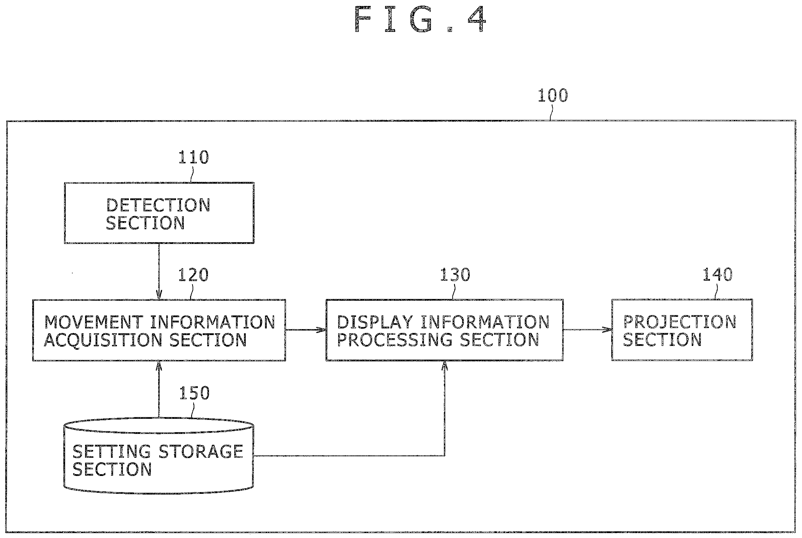

Display image displayed by projection by the projection apparatus 105 of the information processing terminal 100 having such a configuration as described above can be operated or controlled by changing the posture of the information processing terminal 100 or the proximity distance of the information processing terminal 100 to the projection plane. Now, a functional configuration of the information processing terminal 100 is described with reference to FIG. 4.

### Functional Configuration

The information processing terminal 100 includes a detection section 110, a movement information acquisition section 120, a display information processing section 130, a projection section 140, and a setting storage section 150.

The detection section 110 detects a variation of the posture of the information processing terminal 100 or a variation of the proximity distance to the projection plane. The detection section 110 corresponds to the sensor 104 shown in FIG. 1 and can be implemented by an acceleration sensor, an angular speed sensor, a distance sensor or the like. The information processing terminal 100 acquires and outputs the detected direction of gravity, angular speed of the information processing apparatus 100 and proximity distance to the projection plane to the movement information acquisition section 120.

The movement information acquisition section 120 acquires movement information representative of a movement of the information processing terminal 100 such as a posture state or a direction of movement based on a result of detection inputted thereto from the detection section 110. In particular, the movement information acquisition section 120 decides in what manner the information processing terminal 100 is moved by the user from a variation of the direction of gravity or the acceleration of the information processing terminal 100. Then, the movement information acquisition section 120 outputs the acquired movement information to the display information processing section 130.

The display information processing section 130 determines display information to be projected from the projection section 140 so as to be displayed on the screen or the like based on the movement information inputted thereto from the movement information acquisition section 120. For example, if the display information processing section 130 recognizes, for example, from the movement information that the posture of the information processing terminal 100 has changed, then it changes the display information to be displayed from the projection section 140 in response to the posture variation. At this time, the display information processing section 130 decides, from the movement information, an operation input to the display information displayed on the projection plane and changes the display information. The display information processing section 130 can refer to the setting storage section 150 hereinafter described to decide the carried out operation input using the display information currently displayed and the movement information.

By varying the posture of the information processing terminal 100 itself or varying the distance from the information processing terminal 100 to the projection plane in this manner, the display information projected on the projection plane can be operated. The display information processing section 130 outputs the display information to the projection section 140. It is to be noted that the movement information acquisition section 120 and the display information processing section 130 function as an information processing apparatus which changes the display information in response to an operation input to the display information projected on the information processing terminal 100.

The projection section 140 projects display information of an image or the like to the projection plane. The projection section 140 is, for example, a projector and corresponds to the projection apparatus 105 shown in FIG. 1. The user can observe the display information outputted from the projection section 140 to the projection plane and move the information processing terminal 100 to operate or control the display information.

The setting storage section 150 is a storage section for storing information to be used for a display controlling process for varying the display information in response to a posture variation or the like of the information processing terminal 100 and corresponds to the RAM 102 or the nonvolatile memory 103 shown in FIG. 1. The setting storage section 150 stores, for example, a corresponding relationship between a signal representative of a detection result of the detection section 110 and a direction of gravity, an angular speed, a distance from the projection plane and so forth. Further, the setting storage section 150 stores a corresponding relationship between display information and movement information displayed currently and a changing process of the display information, that is, a changing process of display information corresponding to an operation input and so forth. The information mentioned is referred to by the movement information acquisition section 120, display information processing section 130 and so forth. The information stored in the setting storage section 150 may be set in advance or may be set suitably by the user.

### <2. Display Control by the Information Processing Apparatus>

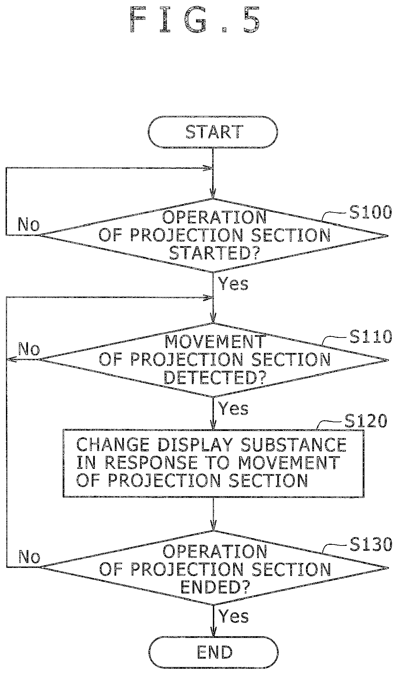

The information processing terminal 100 changes the display information to be projected to the projection plane from the projection section 140 in response to a posture variation and so forth of the information processing terminal 100. In the following, a display controlling process by the information processing terminal 100 is described with reference to FIGS. 5 to 13.

### 2-1. Change of Display Information by Translational Movement of the Information Processing Terminal

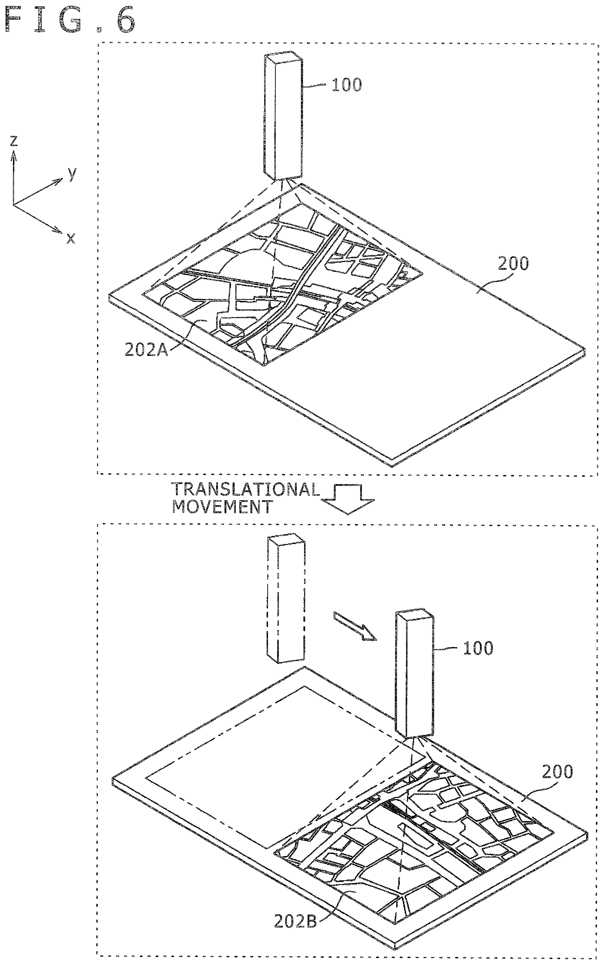

First, a changing process of display information when the information processing terminal 100 is moved translationally is described as an example of the display controlling process by the information processing terminal 100 with reference to FIGS. 5 and 6. It is to be noted that also the display controlling process by the information processing terminal 100 hereinafter described is carried out in accordance with a flow chart of FIG. 5.

With the information processing terminal 100 according to the present embodiment, the range of display information to be displayed on the projection plane can be changed by the user moving the information processing terminal 100 translationally along the projection plane. For example, in the example illustrated in FIG. 6, a map is displayed as display information (e.g., a first image) on a projection plane 200. In a state illustrated in an upper figure of FIG. 6, only a portion 202A of an entire map 202 is displayed on the projection plane 200. If, in this state, the information processing terminal 100 is moved translationally by the user, for example, in an x direction along the projection plane, then the substance of the map 202 displayed on the projection plane 200 is changed from the display substance of the portion 202A to the display substance of another portion 202B (e.g., a second image).

Referring to FIG. 5, such display controlling process is started from decision of whether or not an operation of the projection section 140 has been carried out by the movement information acquisition section 120 at step S100. For example, when the movement information acquisition section 120 detects a projection starting signal for starting projection of display information by the projection section 140 of the information processing terminal 100, then it starts a display controlling process of display information to be projected on the projection plane 200. The projecting starting signal is outputted, for example, if a switch or the like provided on the information processing terminal 100 is depressed, then projection of display information by the projection section 140 is enabled. The movement information acquisition section 120 does not start the display controlling process of display information to be projected on the projection plane 200 before the projection starting signal is detected, and the process at step S100 is repeated.

If it is detected that an operation of the projection section 140 is started, then the movement information acquisition section 120 decides at step S110 whether or not the information processing terminal 100 exhibits some movement. The movement information acquisition section 120 decides from a result of the detection by the detection section 110 whether or not the posture of the information processing terminal 100 exhibits some variation or whether or not the proximity distance to the projection plane 200 exhibits some variation. Then, if the information processing terminal 100 exhibits some movement, then the movement information acquisition section 120 outputs the movement information of the information processing terminal 100 to the display information processing section 130. The display information processing section 130 changes the display information displayed on the projection plane 200 in response to the movement of the information processing terminal 100 based on the display information displayed at present and the movement information at step S120. The display information after the change is outputted to the projection section 140 so that it is displayed on the projection plane 200 by the projection section 140.

In the example illustrated in FIG. 6, a process of moving the eye point of the map 202 displayed by the information processing terminal 100 through translational movement of the information processing terminal 100 when the map 202 is displayed is carried out. The substance of such process is stored in the setting storage section 150. Here, the translational movement of the information processing terminal 100 can be detected by extracting a component of the movement of the information processing terminal 100, for example, depending upon the variation of the acceleration which can be detected by an acceleration sensor or the variation of the angular speed which can be detected by the angular acceleration sensor as described hereinabove. Or, in the case where the information processing terminal 100 includes a camera not shown for picking up an image in the projection direction of the projection section 140, the movement information acquisition section 120 can pick up an image in the projection direction by means of the camera and extract a component of the movement of the information processing terminal 100 from a variation of the picked up image.

When the component of the movement of the information processing terminal 100 is extracted, then the movement information acquisition section 120 outputs the component of the movement as movement information to the display information processing section 130. The display information processing section 130 determines an amount of movement of the display information to be projected, that is, a display information movement amount, in response to the amount of movement by which the information processing terminal 100 is moved translationally based on the movement information. Then, the display information processing section 130 determines the portion 202B moved by the display information movement amount from the portion 202A displayed in the upper figure of FIG. 6 from within the map 202 displayed on the projection plane 200 as new display information and outputs the new display information to the projection section 140.

In this manner, if the user moves the information processing terminal 100 translationally, then also the eye point of the display information to be projected on the projection plane 200 moves correspondingly and the display information to be projected on the projection plane 200 varies. Thereafter, for example, if a predetermined operation such as depression of a switch is carried out and a projecting ending signal for ending the operation by the projection section 140 is detected, then the operation of the projection section 140 is ended at step S130. However, until after the projecting ending signal is detected, the processes beginning with step S110 are carried out repetitively.

The display controlling process in the case where the user moves the information processing terminal 100 translationally along the projection plane so that the information processing terminal 100 changes the range of the display information to be displayed on the projection plane 200 is described above. The user can carry out an operation for changing the display information to be projected on the projection plane 200 only by moving the information processing terminal 100 translationally above the projection plane 200.

### 2-2. Change of Display Information by a Gradient of the Information Processing Terminal

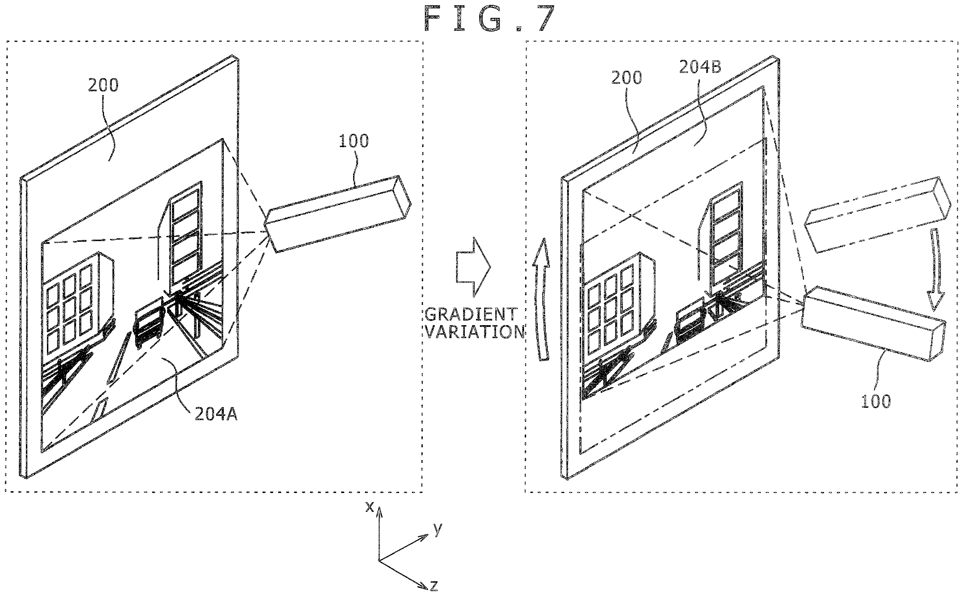

Now, a display controlling process for controlling the eye point for a content projected on the projection plane 200 by the information processing terminal 100 according to the present embodiment is described with reference to FIG. 7.

In the present example, if the gradient from within the posture of the information processing terminal 100 with respect to the projection plane 200 is varied, then the eye point of a content to be projected by the information processing terminal 100, that is, a direction of the line of sight, is controlled and the substance of the display information to be projected varies. For example, if the projection section 140 of the information processing terminal 100 is directed toward the projection plane 200 to start projection, then a portion 204A of a content such as, for example, a photograph 204 is displayed on the projection plane 200 as seen from a left figure of FIG. 7. At this time, the information processing terminal 100 is directed downwardly, that is, in the negative direction of the x axis, and the portion 204A of the photograph 204 when it is viewed in the direction of a downward line of sight is displayed.

It is assumed that, in this state, for example, the information processing terminal 100 is directed upwardly, that is, in the positive direction of the x axis and the posture of the information processing terminal 100 is changed as seen in a right figure of FIG. 7. At this time, since the gradient of the information processing terminal 100 with respect to the projection plane 200 varies, the movement information acquisition section 120 acquires the gradient of the information processing terminal 100 with respect to the projection plane 200 and outputs the acquired gradient to the display information processing section 130.

The display information processing section 130 determines an amount of movement of the display information to be projected, that is, a display information movement amount, in response to a variation of the gradient of the information processing terminal 100 with respect to the projection plane 200 based on the movement information. Then, the display information processing section 130 determines, from within the photograph 204 displayed on the projection plane 200, a portion 204B moved by the display information movement amount from the portion 204A displayed in a left figure of FIG. 7 as new display information and outputs the new display information to the projection section 140. Consequently, the portion 204B of the photograph 204 when viewed in the direction of the obliquely upwardly directed line of sight is displayed as seen in a right figure of FIG. 7.

The display controlling process in the case where the user tilts the information processing terminal 100 with respect to the projection plane so that the information processing terminal 100 changes the range of the display information to be displayed on the projection plane 200 is described above. The user can carry out an operation for changing the display information to be projected to the projection plane 200 only by varying the gradient of the information processing terminal 100 with respect to the projection plane 200.

### 2-3. Scroll of Display Information by a Gradient of the Information Processing Terminal

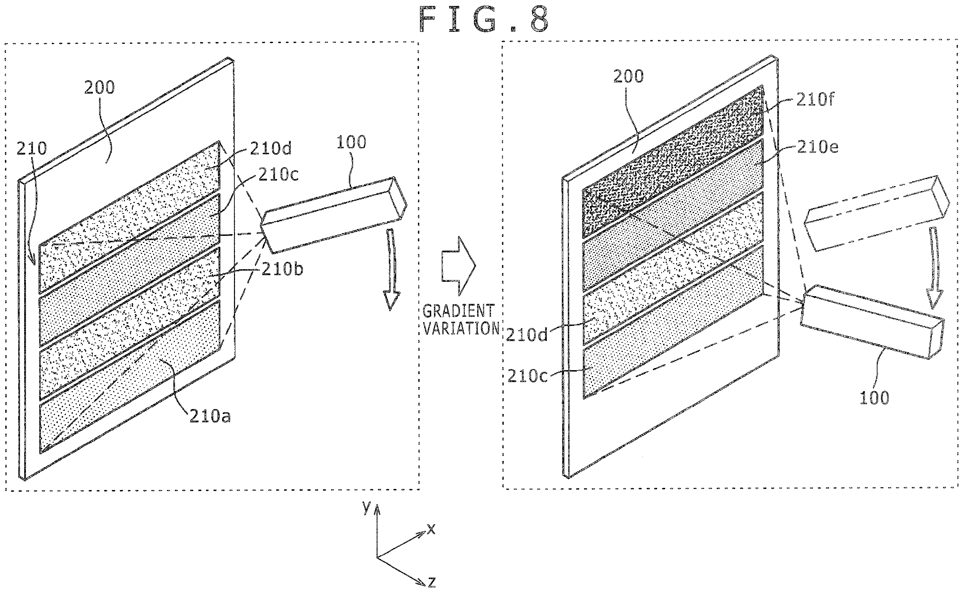

Now, an example wherein an operation of display information displayed on the projection plane 200 is carried out in response to a posture variation of the information processing terminal 100 according to the present embodiment is described with reference to FIGS. 8 to 10.

In the present example, an example is studied wherein an object list 210 formed from a plurality of objects 210a, 210b, 210c, ... is displayed on the projection plane 200. At this time, the information processing terminal 100 detects a rotational movement of the information processing terminal 100 itself in a predetermined direction and scrolls the object list 210 in the direction.

For example, an object list 210 including a plurality of objects 210a, 210b, 210c and 210d arrayed in a y direction is displayed on the projection plane 200 as seen in a left figure of FIG. 8. At this time, if the user rotates the information processing terminal 100 in a predetermined direction, here in the array direction of the object list 210, that is, in the y direction, then the detection section 110 outputs a detection result in response to the movement of the information processing terminal 100. The movement information acquisition section 120 acquires a rotational direction in the y direction of the information processing terminal 100 from the detection result of the detection section 110.

The rotational direction in the y direction signifies a direction of a y-direction component when the information processing terminal 100 is tilted with respect to the projection plane 200 with reference to the z axis perpendicular to the projection plane 200. When the display information processing section 130 detects from the movement information that the information processing terminal 100 is tilted in the y-axis positive direction, then it varies the display information so that the object list 210 is scrolled in the y-axis positive direction. On the other hand, if the display information processing section 130 detects from the movement information that the information processing terminal 100 is tilted in the y-axis negative direction, then it varies the display information so that the object list 210 is scrolled in the y-axis negative direction.

For example, it is assumed that the posture of the information processing terminal 100 varies from a state in which it is directed in an obliquely downward direction of the line of sight to another state as seen in a left figure of FIG. 8 in which it is directed in an obliquely upward direction of the line of sight as seen in a right figure of FIG. 8. At this time, since the information processing terminal 100 is inclined in the y-axis negative direction, the object list 210 is scrolled in the y-axis negative direction as seen in a right figure of FIG. 8. Consequently, for example, the objects 210c, 210d, 210e and 210f are displayed on the projection plane 200. In this manner, it is possible to scroll the projected object list 210 by varying the gradient of the information processing terminal 100 with respect to the projection plane 200.

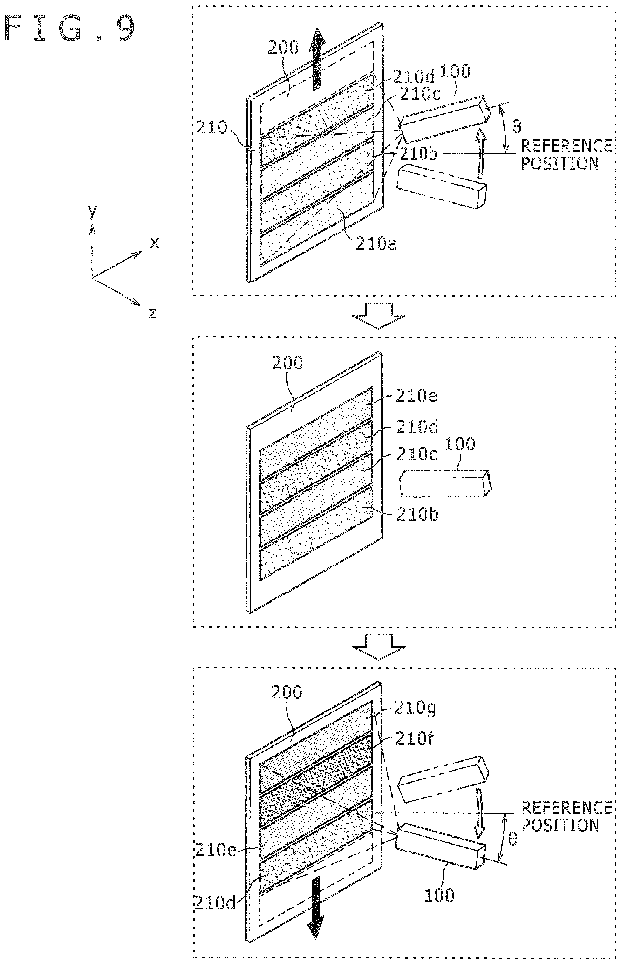

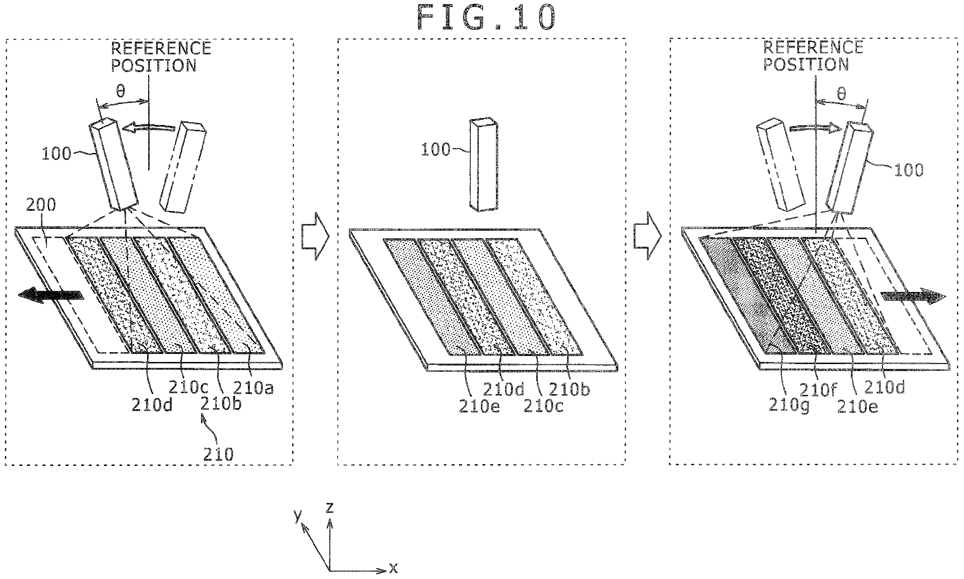

Here, the gradient of the information processing terminal 100 and the display position of the information processing terminal 100 of all objects which configure the object list 210 may correspond one by one to each other. Or the information processing terminal 100 may be configured otherwise such that scrolling is carried out continuously while the information processing terminal 100 is inclined by more than a predetermined angle from a reference position as seen in FIG. 9 or 10.

In the example illustrated in FIG. 9, when an object list 210 formed from a plurality of objects 210a, 210b, 210c, ... is displayed on the projection plane 200 similarly as in the case of FIG. 8, the information processing terminal 100 detects a rotational movement in a predetermined direction of the information processing terminal 100 and scrolls the object list 210 in the direction. At this time, the movement information acquisition section 120 acquires the gradient of the information processing terminal 100 with respect to the reference position which is the z direction perpendicular to the projection plane 200 from the detection result of the detection section 110. It is to be noted that the reference position may be determined based on the positional relationship to the projection plane 200. Then, the display information processing section 130 decides whether or not the gradient of the information processing terminal 100 from the reference position is greater than the predetermined angle. If the gradient is greater than the predetermined angle, then the display information processing section 130 scrolls the object list 210 continuously in the rotational direction of the information processing terminal 100.

For example, it is assumed that the information processing terminal 100 is inclined in the y-axis positive direction as seen in an upper figure of FIG. 9 and the gradient θ of the information processing terminal 100 from the reference position is greater than the predetermined angle. At this time, the display information processing section 130 continuously scrolls the object list 210 displayed on the projection plane 200 in the y-axis positive direction. On the other hand, it is assumed that the information processing terminal 100 is inclined in the y-axis negative direction and the gradient θ of the information processing terminal 100 from the reference position is greater than the predetermined angle. At this time, the display information processing section 130 continuously scrolls the object list 210 displayed on the projection plane 200 in the y-axis negative direction.

It is to be noted that, in the case where the gradient of the information processing terminal 100 from the reference position is smaller than the predetermined angle, the object list 210 is scrolled in the rotational direction in response to the magnitude of the gradient θ of the information processing terminal 100.

Further, while scrolling of the object list 210 formed from a plurality of objects arrayed in the projection plane 200 erected in the vertical direction is described above with reference to FIG. 9, also in the case where the projection plane 200 is placed horizontally as seen in FIG. 10, display control is carried out similarly. In FIG. 10, the projection plane 200 is provided on a horizontal plane perpendicular to the vertical direction, and objects 210a, 210b, 210c, ... are arrayed in a predetermined direction, for example, in the x direction, along a horizontal plane. Also in this instance, the information processing terminal 100 detects a rotational movement of the information processing terminal 100 in a predetermined direction and scrolls the object list 210 in the direction.

At this time, the movement information acquisition section 120 acquires the gradient of the information processing terminal 100 from a reference position which is the z direction perpendicular to the projection plane 200 from a result of the detection by the information processing terminal 100. Then, the display information processing section 130 decides whether or not the gradient of the information processing terminal 100 from the reference position is equal to or greater than the predetermined angle. If the gradient is equal to or greater than the predetermined angle, then the display information processing section 130 continuously scrolls the object list 210 in the rotational direction of the information processing terminal 100.

For example, it is assumed that the information processing terminal 100 is inclined in the x-axis negative direction and the gradient θ of the information processing terminal 100 from the reference position is equal to or greater than the predetermined angle as seen in a left figure of FIG. 10. At this time, the display information processing section 130 continuously scrolls the object list 210 displayed on the projection plane 200 in the x-axis negative direction. On the other hand, it is assumed that the information processing terminal 100 is inclined in the x-axis positive direction and the gradient θ of the information processing terminal 100 from the reference position is equal to or greater than the predetermined angle as seen in a right figure of FIG. 10. At this time, the display information processing section 130 continuously scrolls the object list 210 displayed on the projection plane 200 in the x-axis positive direction.

It is to be noted that, in the case where the gradient of the information processing terminal 100 from the reference position is smaller than the predetermined angle, the object list 210 is scrolled in the rotational direction in response to the magnitude of the gradient θ of the information processing terminal 100. The projected object list 210 can be scrolled by varying the gradient of the information processing terminal 100 with respect to the projection plane 200 in this manner.

### 2-4. Object Selection Operation from within an Object Group

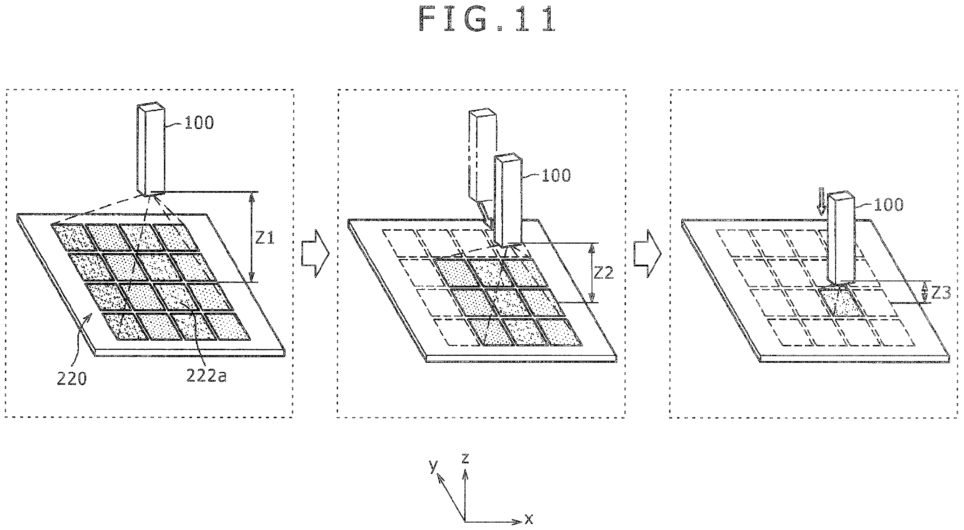

The detection section 110 of the information processing terminal 100 according to the present embodiment can detect also the proximity distance of the information processing terminal 100 with respect to the projection plane 200. Thus, the information processing terminal 100 according to the present embodiment can carry out also an operation for selecting a desired object from within an object group formed from a plurality of objects in response to the proximity distance. In the following, a display controlling process of display information to be displayed on the projection plane 200 when an operation for selecting an object from within an object group is carried out by the information processing terminal 100 is described with reference to FIG. 11.

It is assumed that display information to be projected from the projection section 140 of the information processing terminal 100 is an object group 220 formed from a plurality of objects 222 as seen in FIG. 11. When the projection section 140 of the information processing terminal 100 is spaced by a distance Z1 from the projection plane 200, the objects 222 are displayed in an array of 4 × 4 grating on the projection plane 200 as seen in a left figure of FIG. 11. In the present example, the display information processing section 130 varies the number of objects 222 to be displayed from within the object group 220 in response to the proximity distance of the information processing terminal 100 to the projection plane 200.

For example, as the distance of the information processing terminal 100 to the projection plane 200 decreases, the display information processing section 130 decreases the number of objects 222 to be displayed on the projection plane 200 and finally displays only one object 222. By decreasing the number of objects 222 to be displayed on the projection plane 200 in this manner, it is possible to narrow down the objects 222 of the object group 220 such that a single object 222 can be selected finally.

In FIG. 11, when the information processing terminal 100 is moved toward the projection plane 200 to vary the distance from the projection plane 200 to the information processing terminal 100 from the distance Z1 to another distance Z2, the number of objects 222 displayed on the projection plane 200 is decreased as seen in a figure centrally in FIG. 11. Those objects 222 to be displayed as selection candidates when the information processing terminal 100 is moved toward the projection plane 200 to narrow down the objects 222 are determined in response to the position of the information processing terminal 100 with respect to the projection plane 200.

For example, it is assumed that the information processing terminal 100 approaches the projection plane 200 while it is moved in the x-axis positive direction and the y-axis negative direction toward a position above a desired object 222a. Thereupon, only 3 × 3 objects 222 centered at the object 222a from within the projection plane 200 are displayed. In this manner, the selection target can be narrowed down from 4 × 4 objects 222 to 3 × 3 objects 222.

Further, if the information processing terminal 100 is moved toward the projection plane 200 to approach the desired object 222a until the distance from the projection plane 200 to the information processing terminal 100 becomes equal to a distance Z3, then the display information processing section 130 causes only the desired object 222a to be displayed as seen in a right figure of FIG. 11. The object 222a can be selected by causing only the desired object 222a to be displayed in this manner. Thereafter, if a predetermined operation such as to depress a button provided on the information processing terminal 100 is carried out, then a function, for example, associated with the object 222a can be executed.

It is to be noted that, while, in the example described above, the display information processing section 130 changes the display information depending upon whether or not the proximity distance between the projection plane 200 and the information processing terminal 100 exceeds any of the distances Z1 to Z3 set in advance, the present disclosure is not limited to this example. For example, the display information may be varied continuously in response to the proximity distance between the projection plane 200 and the information processing terminal 100.

By varying the proximity distance between the information processing terminal 100 including the projection section 140 and the projection plane 200 in this manner, narrowing down or selection of display information displayed on the projection plane 200 can be carried out. Since the user can operate display information only by varying the position of the information processing terminal 100 with respect to the projection plane 200, it can carry out an operation intuitively.

### 2-5. Zoom processing in Response to the Proximity Distance between the Information Processing Terminal and a Projection Plane

As another example of operating display information displayed on the projection plane 200 using the proximity distance between the projection plane 200 and the information processing terminal 100, for example, also it is possible to change the display granularity of display information displayed on the projection plane 200 in response to the proximity distance.

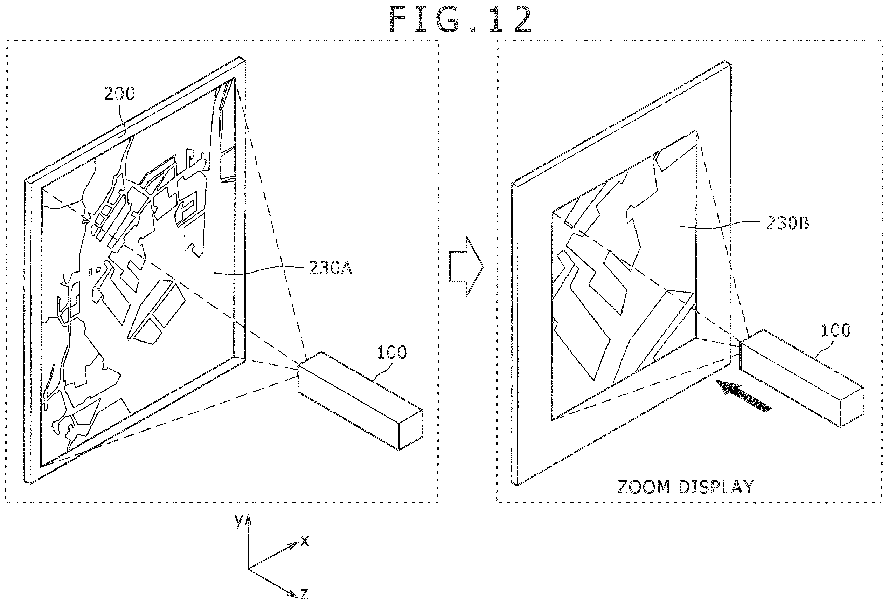

Referring to FIG. 12, it is assumed that, for example, a map 230 is projected as display information to the projection plane 200 by the projection section 140 of the information processing terminal 100. When the information processing terminal 100 and the projection plane 200 are spaced away from each other as seen in a left figure of FIG. 12, a map 230A for a wide area is displayed on the projection plane 200. If, in this state, the information processing terminal 100 is moved in the z direction toward the projection plane 200, then a zoomed map 230B is displayed on the projection plane 200 as seen in a right figure of FIG. 12.

The zoom process of the display information is carried out, for example, by varying the display granularity in response to the proximity distance around an intersecting point of a perpendicular from the projection section 140 of the information processing terminal 100 to the projection plane 200 with the projection plane 200. As the proximity distance between the information processing terminal 100 and the projection plane 200 decreases, the display granularity increases and the display information is displayed in a correspondingly expanded state.

Consequently, the user can carry out zoom-in/zoom-out of display information displayed on the projection plane 200 by moving the information processing terminal 100 toward or away from the projection plane 200, and can carry out an operation intuitively.

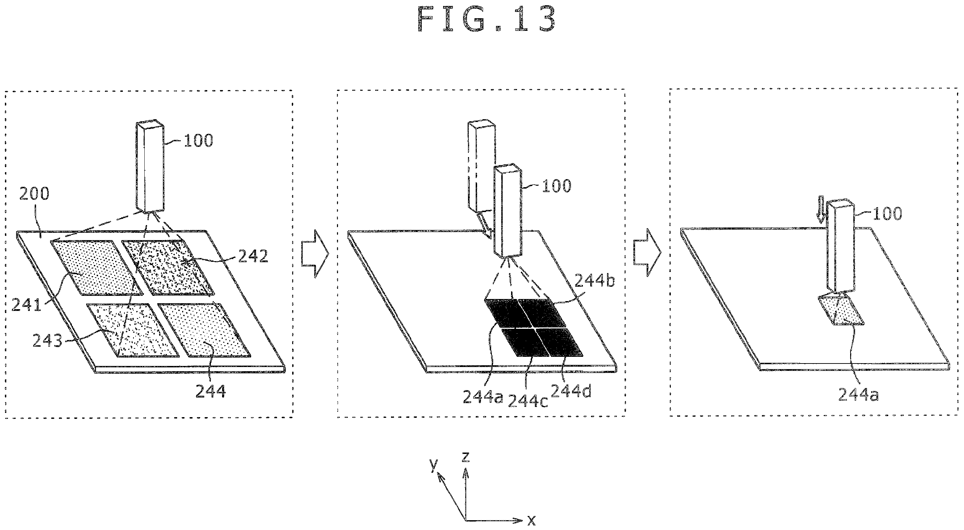

As another example wherein the display granularity of display information displayed on the projection plane 200 is changed in response to the proximity distance, it is possible to change the display granularity of a GUI in response to the proximity distance as seen in FIG. 13. It is assumed that, for example, a plurality of objects 241, 242, 243 and 244 are displayed on the projection plane 200 as seen in a left figure of FIG. 13. The objects 241, 242, 243 and 244 are representative icons representing general substances, and objects belonging to the same group are associated with each of the objects 241, 242, 243 and 244.

If the information processing terminal 100 is moved toward the projection plane 200, then objects are developed in response to the proximity distance. An object which is to make a target of the development may be that object to which the information processing terminal 100 is positioned most closely. For example, it is assumed that, in a state illustrated in a left figure of FIG. 13, the information processing terminal 100 is moved in the x-axis positive direction and the y-axis negative direction toward a position above the objects 244 to approach the projection plane 200. The display information processing section 130 recognizes the movement of the information processing terminal 100 from the movement information and develops the object 244 such that it causes objects 244a, 244b, 244c and 244d associated with the object 244 to be displayed on the projection plane as seen in a central figure of FIG. 13.

Thereafter, if the information processing terminal 100 further approaches the projection plane 200, then only that object in the proximity of which the information processing terminal 100 is positioned is displayed. For example, if the information processing terminal 100 approaches the projection plane 200 toward the object 244a as seen in a right figure of FIG. 13, then only the object 244a is displayed on the projection plane 200. By causing only the desired object 244a to be displayed in this manner, the object 244a can be selected. Thereafter, if a predetermined operation such as to depress a button provided on the information processing terminal 100 or the like is carried out, then a function, for example, associated with the object 244a can be executed.

It is to be noted that, while, in the example illustrated in FIG. 13, the number of times by which development of an object is carried out is one time, the present disclosure is not limited to this. The objects may be arranged in a plurality of hierarchical layers. At this time, the information processing terminal 100 may change a hierarchical layer to be displayed in response to the proximity distance thereof to the projection plane 200. Further, while, in the examples illustrated in FIGS. 12 and 13, the display information processing section 130 continuously varies the display information in response to the proximity distance between the projection plane 200 and the information processing terminal 100, the present disclosure is not limited to this. For example, the display information may be changed depending upon whether or not the proximity distance between the projection plane 200 and the information processing terminal 100 exceeds a distance threshold value set in advance as in the example of FIG. 11.

The configuration of the information processing terminal 100 including the projection section 140 according to the present embodiment and the display controlling process by the information processing terminal 100 have been described, above. The information processing terminal 100 according to the present embodiment can vary a virtual eye point for display information to be projected on the projection plane 200 by varying the posture of the information processing terminal 100. Consequently, the information processing terminal 100 makes it possible for a user to browse display information, particularly a content of a 3D image or an omnidirectional image, with an immersion feeling.

Further, by varying the posture of the information processing terminal 100, a display region changing operation, a scrolling operation, a selection operation or the like of display information to be displayed on the projection plane 200 can be carried out. The user can carry out an operation intuitively while watching the projected display information. Further, by varying the proximity distance between the information processing terminal 100 and the projection plane 200, zoom-in/zoom-out of display information of a map or the like or a development operation of display information can be carried out, and the user can carry out an operation intuitively.

It is to be noted that, while, in the description of the embodiment, the z axis perpendicular to the projection plane 200 is set as a reference position, the present disclosure is not limited to this. For example, the user may set a reference position upon starting of projection by the projection section 140 of the information processing terminal 100, or the reference position may be set by calibration upon starting of use of the information processing terminal 100.

In accordance with embodiments of the invention there is provided a device-implemented method for processing image data, comprising: projecting, by a projector including in the device, a first image on a projection surface; detecting movement of the device; and changing the first image to a second image based on the detected movement.

The method may further comprise detecting at least one of a horizontal component, a vertical component, or a circular component of the movement.

The method may further comprise detecting at least one of an angular speed or an acceleration corresponding to the movement.

The method may further comprise determining a distance between the device and the projection surface.

The method may further comprise changing the first image to the second image by performing at least one of enlarging the first image or changing a granularity of the first image, to generate the second image.

The method may further comprise executing a scrolling operation based on the detected movement, wherein the scrolling operation includes scrolling through a plurality of objects included in the first image.

In so far as embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An apparatus for processing image data, comprising:
an output unit (105, 140) configured to project a first image (202A, 204A, 230A) on a projection surface (200);
a detection unit (104, 110) configured to detect movement of the apparatus; and
a processor (101) configured to change the first image (202A, 204A, 230A) to a second image (202B, 204B, 230B) based on the detected movement, **characterized in that** the first image includes a plurality of objects (241-244; 244a-244d) and wherein the first image includes a hierarchy of objects (214-244, 244a-244d) including a first hierarchical level and a second hierarchical level, and the processor is further configured to change the first image to the second image, based on the detected movement, a number of objects (244a) in the second image being less than a number of objects (241-244; 244a-244d) in the first image by changing the hierarchical level to be displayed.

2. The apparatus of claim 1, wherein the detection unit (104, 110) is configured to detect a horizontal component of the movement.

3. The apparatus of claim 1, wherein the detection unit (104, 110) is configured to detect a vertical component of the movement.

4. The apparatus of claim 1, wherein the detection unit (104, 110) is configured to detect a circular component of the movement.

5. The apparatus of claim 1, wherein the detection unit (104, 110) comprises a sensing unit configured to detect at least one of an angular speed or acceleration corresponding to the movement.

6. The apparatus of claim 1, wherein the detection unit (104, 110) is configured to determine a distance (Z1, Z2, Z3) between the apparatus and the projection surface (200).

7. The apparatus of claim 1, wherein the processor is configured to change the first image to the second image, based on the detected movement, by eliminating, in the second image, display of objects displayed in the first image.

8. A device-implemented method for processing image data, comprising:
Projecting (S100), by a projector including in the device, a first image on a projection surface detecting movement of the device; and
changing (S120) the first image to a second image based on the detected movement, **characterized by** the first image including a plurality of objects and wherein the first image includes a hierarchy of objects (214-244, 244a-244d) including a first hierarchical level and a second hierarchical level, and changing the first image to the second image, based on the detected movement, a number of objects in the second image being less than a number of objects in the first image by changing the hierarchical levels to be displayed.

9. A computer-readable storage medium comprising instructions, which when executed on a processor, cause the processor to perform a method of processing image data according to claim 8.

## Patentansprüche

1. Vorrichtung zur Verarbeitung von Bilddaten, umfassend:
eine Ausgabeeinheit (105, 140), ausgelegt zum Projizieren eines ersten Bilds (202A, 204A, 230A) auf eine Projektionsoberfläche (200);
eine Detektionseinheit (104, 110), ausgelegt zum Detektieren von Bewegung der Vorrichtung; und
einen Prozessor (101), ausgelegt zum Ändern des ersten Bilds (202A, 204A, 230A) in ein zweites Bild (202B, 204B, 230B) auf Grundlage der detektierten Bewegung, **dadurch gekennzeichnet, dass** das erste Bild eine Vielzahl von Objekten (241-244; 244a-244d) aufweist und wobei das erste Bild eine Hierarchie von Objekten (214-244; 244a-244d) mit einer ersten Hierarchieebene und einer zweiten Hierarchieebene aufweist, und der Prozessor ferner ausgelegt ist zum Ändern des ersten Bilds in ein zweites Bild auf Grundlage der detektierten Bewegung, dass eine Anzahl von Objekten (244a) in dem zweiten Bild kleiner als eine Anzahl von Objekten (241-244; 244a-244d) in dem ersten Bild ist, durch Ändern der anzuzeigenden Hierarchieebene.

2. Vorrichtung nach Anspruch 1, wobei die Detektionseinheit (104, 110) ausgelegt ist zum Detektieren einer Horizontalkomponente der Bewegung.

3. Vorrichtung nach Anspruch 1, wobei die Detektionseinheit (104, 110) ausgelegt ist zum Detektieren einer Vertikalkomponente der Bewegung.

4. Vorrichtung nach Anspruch 1, wobei die Detektionseinheit (104, 110) ausgelegt ist zum Detektieren einer Zirkularkomponente der Bewegung.

5. Vorrichtung nach Anspruch 1, wobei die Detektionseinheit (104, 110) eine Sensoreinheit aufweist, die ausgelegt ist zum Detektieren einer Winkelgeschwindigkeit und/oder einer Beschleunigung entsprechend der Bewegung.

6. Vorrichtung nach Anspruch 1, wobei die Detektionseinheit (104, 110) ausgelegt ist zum Bestimmen einer Entfernung (Z1, Z2, Z3) zwischen der Vorrichtung und der Projektionsoberfläche (200).

7. Vorrichtung nach Anspruch 1, wobei der Prozessor ausgelegt ist zum Ändern des ersten Bilds in das zweite Bild auf Grundlage der detektierten Bewegung durch Eliminieren, in dem zweiten Bild, einer Anzeige von in dem ersten Bild angezeigten Objekten.

8. Vorrichtungsimplementiertes Verfahren zum Verarbeiten von Bilddaten, umfassend:
Projizieren (S100), durch einen in der Vorrichtung enthaltenen Projektor, eines ersten Bilds auf eine Projektionsoberfläche;
Detektieren von Bewegung der Vorrichtung; und
Ändern (S120) des ersten Bilds in ein zweites Bild auf Grundlage der detektierten Bewegung, **dadurch gekennzeichnet, dass** das erste Bild eine Vielzahl von Objekten aufweist und wobei das erste Bild eine Hierarchie von Objekten (214-244; 244a-244d) mit einer ersten Hierarchieebene und einer zweiten Hierarchieebene aufweist, und Ändern des ersten Bilds in ein zweites Bild auf Grundlage der detektierten Bewegung, dass eine Anzahl von Objekten in dem zweiten Bild kleiner als eine Anzahl von Objekten in dem ersten Bild ist, durch Ändern der anzuzeigenden Hierarchieebenen.

9. Computerlesbares Speichermedium, umfassend Anweisungen, welche, wenn sie auf einem Prozessor ausgeführt werden, den Prozessor veranlassen, ein Verfahren zum Verarbeiten von Bilddaten nach Anspruch 8 durchzuführen.

## Revendications

1. Appareil pour traiter des données d'image, comprenant :
une unité de sortie (105, 140) conçue pour projeter une première image (202A, 204A, 230A) sur une surface de projection (200) ;
une unité de détection (104, 110) conçue pour détecter un mouvement de l'appareil ; et
un processeur (101) conçu pour changer la première image (202A, 204A, 230A) en une seconde image (202B, 204B, 230B) en fonction du mouvement détecté, **caractérisé en ce que** la première image comprend une pluralité d'objets (241-244 ; 244a-244d) et dans lequel la première image comprend une hiérarchie d'objets (214-244, 244a-244d) comprenant un premier niveau hiérarchique et un second niveau hiérarchique, et le processeur est en outre conçu pour changer la première image en la seconde image, en fonction du mouvement détecté, un nombre d'objets (244a) dans la seconde image étant inférieur à un nombre d'objets (241-244 ; 244a-244d) dans la première image en changeant le niveau hiérarchique à appliquer.

2. Appareil selon la revendication 1, dans lequel l'unité de détection (104, 110) est conçue pour détecter une composante horizontale du mouvement.

3. Appareil selon la revendication 1, dans lequel l'unité de détection (104, 110) est conçue pour détecter une composante verticale du mouvement.

4. Appareil selon la revendication 1, dans lequel l'unité de détection (104, 110) est conçue pour détecter une composante circulaire du mouvement.

5. Appareil selon la revendication 1, dans lequel l'unité de détection (104, 110) comprend une unité de capteur conçue pour détecter l'une au moins d'une vitesse angulaire et d'une accélération correspondant au mouvement.

6. Appareil selon la revendication 1, dans lequel l'unité de détection (104, 110) est conçue pour déterminer une distance (Z1, Z2, Z3) entre l'appareil et la surface de projection (200).

7. Appareil selon la revendication 1, dans lequel le processeur est conçu pour changer la première image en la seconde image, en fonction du mouvement détecté, en éliminant, dans la seconde image, l'affichage d'objets affichés dans la première image.

8. Procédé mis en oeuvre par dispositif pour traiter des données d'image, consistant à :
projeter (S100), avec un projecteur inclus dans le dispositif, une première image sur une surface de projection détectant un mouvement du dispositif ; et
changer (S120) la première image en une seconde image en fonction du mouvement détecté, **caractérisé en ce que** la première image comprend une pluralité d'objets, et dans lequel la première image comprend une hiérarchie d'objets (214-244, 244a-244d) comprenant un premier niveau hiérarchique et un second niveau hiérarchique, et changer la première image en la seconde image, en fonction du mouvement détecté, un nombre d'objets dans la seconde image étant inférieur à un nombre d'objets dans la première image en changeant les niveaux hiérarchiques à afficher.

9. Support de stockage lisible par ordinateur comprenant des instructions qui, lorsqu'elles sont exécutées sur un processeur, font que le processeur va effectuer un procédé de traitement de données d'image selon la revendication 8.
